# EUROPÄISCHE PATENTSCHRIFT

(11) **EP 1 216 785 B1**
(45) Veröffentlichungstag und Bekanntmachung des Hinweises auf die Patenterteilung: **05.03.2008**
(21) Anmeldenummer: 01128579.8
(22) Anmeldetag: 30.11.2001
(51) Int. Cl.: B23P 15/04, F01D 5/18

(54) **Verfahren zur schnellen Herstellung von hohlen Komponenten von Strömungsmaschinen für die Fertigungsentwicklung**
Process for the rapid production of hollow components of flow machines for manufacturing development
Procédé de production rapide des éléments creux de turbomachines pour le développement de la fabrication

(30) Priorität: 22.12.2000 DE 10064267
(43) Veröffentlichungstag der Anmeldung: 26.06.2002
(73) Patentinhaber: Alstom Technology Ltd, 5400 Baden (CH)
(72) Erfinder: Beeck, Alexander, Dr., Orlando, Florida 32828 (US); Fernihough, John, 5408 Ennetbaden (CH)

(56) Entgegenhaltungen:
- GB-A- 1 471 963
- GB-A- 2 095 589
- US-A- 4 391 684
- "A DECADE OF RAPID PROTOTYPING" AUTOMOTIVE ENGINEER, MECHANICAL ENGINEERING PUBL.LTD. BURY ST.EDMUNDS, GB, Bd. 22, Nr. 4, 1. Mai 1997 (1997-05-01), Seiten 44-46,51-52,55, XP000689599 ISSN: 0307-6490

## Beschreibung

### Technisches Anwendungsgebiet

Die vorliegende Erfindung betrifft ein Verfahren zur schnellen Herstellung von Turbinenschaufeln für die Fertigungsentwicklung.

### Stand der Technik

Für die Herstellung von modernen Hochtemperatur-Turbinenschaufeln muss aufgrund der aufwendigen Werkzeugherstellung und der erforderlichen Guss- und Bearbeitungsentwicklung ein Zeitraum von mehreren Monaten bis zu einem Jahr oder auch darüber veranschlagt werden. Jede einzelne Entwicklungsstufe erfordert zahlreiche Tests und Feinanpassungen, die erhebliche Zeit beanspruchen. Besonders nachteilig wirkt sich hierbei aus, dass die anschließende Fertigungsentwicklung erst begonnen werden kann, wenn die Konstruktion weitgehend abgeschlossen ist. Damit sind aus der Fertigung resultierende notwendige Änderungen in den vorangehenden Entwicklungsstufen nur mit hohem Kosten- und Zeitaufwand möglich.

Zur Verkürzung der Gesamtentwicklungszeit können Rapid-Prototype-Methoden eingesetzt werden, die eine annähernd parallele Durchführung von Guss- und Bearbeitungsentwicklung sowie Fertigungsentwicklung ermöglichen. Die Druckschrift "A Decade of rapid Prototyping" Automotive Engineer, Mechanical Engineering Publ. Ltd. Bury St. Edmunds, GB, Bd. 22, 1997, Seiten 44-46, 51-52, 55 gibt hierzu einen Überblick über die Entwicklung und den Stand von Rapid-Prototyping Systemen und Methoden.
Mit Hilfe dieser Rapid-Prototype-Methoden werden basierend auf Computermodelldaten Gussrohlinge hergestellt, mit denen dann sowohl die Gussentwicklung als auch die mechanische Bearbeitung, beispielsweise Schleifen, Fräsen usw., und gegebenenfalls Bauteiltests in Prüfständen durchgeführt werden können, ohne dass ein zugehöriges Gusswerkzeug vorhanden sein muss.

Während diese Technik bei Vollgusskomponenten große Vorteile bietet, ist die Anwendung bei hohlen Komponenten nicht ohne erhebliche Einschränkungen möglich. So müssen für hohle Turbinenschaufeln zunächst Gusskerne hergestellt werden, die beim Gießen der Schaufeln den späteren Hohlraum einnehmen. Geeignete Rapid-Prototype-Methoden zur Herstellung der hierfür erforderlichen Keramikkerne sind jedoch noch nicht ausgreift oder erfordern sehr lange Herstellungszeiten, wie dies beispielsweise bei einer Verfahrensführung der Fall ist, bei der ein Aluminiumwerkzeug als Kernform eingesetzt wird.
Je nach Verwendungszweck der mit einem Rapid-Prototype-Verfahren hergestellten Komponente in der Fertigungsentwicklung werden daher entweder Vollschaufeln erzeugt oder zur Erzeugung des Hohlraumes Kerne ähnlicher, bereits existierender Komponenten eingesetzt, die eine vergleichbare Größe wie der zu erzeugende Hohlraum aufweisen. Gerade bei der Entwicklung von erodierten oder lasergefertigten Kühlluftbohrungen ist es jedoch erforderlich, dass die in dem erzeugten Testobjekt vorliegenden Wandstärken korrekt sind, damit die Entwicklung dieser Kühlluftbohrungen anhand der schnell gefertigten Komponente richtig durchgeführt werden kann. Für eine derartige Entwicklung können weder Vollschaufeln verwendet noch kann ein bereits vorhandener Kern einer ähnlichen Größe für ein Rapid-Prototype-Verfahren eingesetzt werden.
Aus der Druckschrift GB 2095589 A geht beispielsweise ein Verfahren zur Herstellung einer Turbinenschaufel hervor, bei dem die Turbinenschaufel durch Fügen zweier Turbinenschaufelhälften hergestellt wird. Das angegebene Verfahren stellt darauf ab, die Fügeflächen beider Turbinenschaufelhälften vor dem Fügen durch Hartlöten mittels Elektroentladung zu bearbeiten. Dabei wird eine Turbinenschaufelhälfte mit der Anode, die andere Turbinenschaufelhälfte mit der Katode einer Stromquelle verbunden. Anschliessend werden die Fügeflächen so angeordnet, dass sie sich in geringem Abstand gegenüberliegen. In die dabei entstehenden Spalte wird eine dielektrische Flüssigkeit eingebracht. Wird die Stromquelle aktiviert, so ergeben sich Entladungen, die die Unebenheiten der gegenüberliegenden Oberflächen erodieren.

Die Aufgabe der vorliegenden Erfindung besteht darin, ein Verfahren zur schnellen Herstellung von Turbinenschaufeln von Strömungsmaschinen anzugeben, das den Einsatz der auf diese Weise gefertigten Turbinenschaufeln in der Fertigungsentwicklung oder bei Bauteiltests, insbesondere im Hinblick auf die Entwicklung des Kühlsystems dieser Komponenten, ermöglicht.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Ansprüche.

Bei dem erfindungsgemäßen Verfahren wird die herzustellende Turbinenschaufel in zwei oder mehrere Teilstücke derart unterteilt, dass keines der Teilstücke einen Hohlraum aufweist. Die zwei oder mehreren Teilstücke werden einzeln gegossen und anschließend zur Bildung der hohlen Komponente zusammengefügt. Die Herstellung der einzelnen Teilstücke erfolgt hierbei in bekannter Weise durch Gießen der Teilstücke in einer entsprechenden vorzugsweise keramischen Gussschale unter Einsatz eines Rapid-Prototype-Verfahrens. Dabei wird die Turbinenschaufel derart in Teilstücke unterteilt, dass ein erstes Teistück als Einschub in ein zweites Teilstück ausgebildet ist, wobei das zweite Teilstück zumindest eine Rückhaltefläche für das erste Teilstück bietet, die die während der Rotation der Turbinenschaufel auf das erste Teilstück einwirkenden Fliehkräfte aufnimmt.

Durch das Gießen der einzelnen Teilstücke und das anschließende Zusammensetzen dieser Teilstücke unter Bildung des Hohlraums (oder der Hohlräume) zur Fertigstellung der Komponente entfällt die Notwendigkeit der Kernherstellung, um den oder die Hohlräume der Komponente zu erzeugen. Das Zusammenfügen der Teilstücke erfolgt hierbei beispielsweise durch Kleben, Hartlöten, Schweißen oder ähnliche Fügemethoden. Die Teilstücke können auch mittels Schrauben oder Nieten zusammengefügt werden.

Geeignete Rapid-Prototype-Verfahren zur Herstellung der Gussschalen sind dem Fachmann bekannt. Vorzugsweise wird hierbei mittels Stereolithographie oder anderen geeigneten Verfahren ein Kunststoffmodell der Komponente erzeugt, das als innere Form für die Herstellung der Keramikgussschale dient. Dieses Verfahren ermöglicht die einfache, kostengünstige und schnelle Erzeugung der Keramikgussschale, in die dann die einzelnen Teilstücke gegossen werden. Durch den Wegfall der Notwendigkeit der Herstellung eines Gusskernes wird das gesamte Verfahren vereinfacht und beschleunigt.

Erfindungsgemäß wurde hierbei erkannt, dass für viele Bereiche der Fertigungsentwicklung eine aus mehreren Teilstücken zusammengefügte Turbinenschaufel ausreichend ist. Die Turbinenschaufel muss hierbei für die meisten Entwicklungsschritte oder Tests nicht aus einem Guss gefertigt sein. Beispielsweise können zwei Hälften der Turbinenschaufel auf diese Weise im Präzisionsgussverfahren hergestellt und anschließend zusammengeschweißt werden. Damit werden dann Turbinenschaufeln erzeugt, die zwar für den Dauerbetrieb in einer Maschine aus Festigkeitsgründen ungeeignet sind, aber dennoch zur Fertigungsentwicklung genügen. Vor allem Fertigungsschritte, die eine realistische Wandstärkenverteilung oder eine realitätsnahe Innenkontur erfordern, profitieren von einer derartig hergestellten Komponente. Beispiele für den Einsatz der Komponente in der Fertigungsentwicklung sind daher insbesondere die Entwicklung der Kühlluftöffnungen, beispielsweise durch Laserbohren, die Durchführung von Durchflusstests oder Untersuchungen zur Aufbringung der Innenbeschichtung oder der Aussenbeschichtung (z.B. Korrosionsschutzschicht oder TBC).
Damit kann die Fertigungsentwicklung bereits begonnen werden, bevor aus der eigentlichen Gussentwicklung die ersten Prototypenbauteile zur Verfügung stehen. Bereits in der Konzeptphase können erste Fertigungsversuche auf einfache und preiswerte Weise durchgeführt werden, um eine frühe Rückführung erster Fertigungserkenntnisse in die Konstruktion zu erhalten.

Weiterhin können auf diese Weise hergestellte Schaufeln sowohl in einem Prüfstand als auch - in entsprechender Auslegung - zeitlich begrenzt in einer Prototypenmaschine getestet werden, bevor die Werkzeuge für den Guss und die Bearbeitung in Auftrag gegeben werden. Somit kann die Fertigungsentwicklung schon zu einem frühen Zeitpunkt erfolgen und ist insbesondere unabhängig von der Fertigstellung der aufwendigen Guss- und Kernwerkzeuge. Fertigungsverfahren können dann bereits während der Konstruktionsphase zugefüttert werden (Concurrent Engineering).

Bei geschickter Aufteilung bzw. Unterteilung der herzustellenden Turbinenschaufel in die einzelnen Teilstücke kann insbesondere die Eignung dieser schnell hergestellten Komponente für Bauteiltests verbessert werden. So erfolgt diese Unterteilung derart, dass beispielsweise bei zwei Teilstücken das erste Teilstück als Einschub in das zweite Teilstück ausgebildet wird, wobei das zweite Teilstück zumindest eine Rückhaltefläche für das erste Teilstück bietet, die die während einer Rotation der Turbinenschaufel auf das erste Teilstück einwirkenden Fliehkräfte aufnimmt. Durch eine derartige Ausgestaltung bzw. Unterteilung der Teilstücke führen die bei den Tests auftretenden Fliehkräfte nicht zu einer Beanspruchung der Fügeverbindung, so dass keine hohen Anforderungen an deren Festigkeit gestellt werden.

### Kurze Beschreibung der Zeichnungen

Das erfindungsgemäße Verfahren wird nachfolgend anhand von Ausführungsbeispielen in Verbindung mit den Zeichnungen ohne Beschränkung des allgemeinen Erfindungsgedankens nochmals kurz erläutert. Hierbei zeigen:
- Fig. 1: ein erstes Beispiel für die Unterteilung einer Turbinenschaufel in einzelne Teilstücke; und
- Fig. 2: ein zweites Beispiel für die Unterteilung einer Turbinenschaufeln in einzelne Teilstücke.

### Wege zur Ausführung der Erfindung

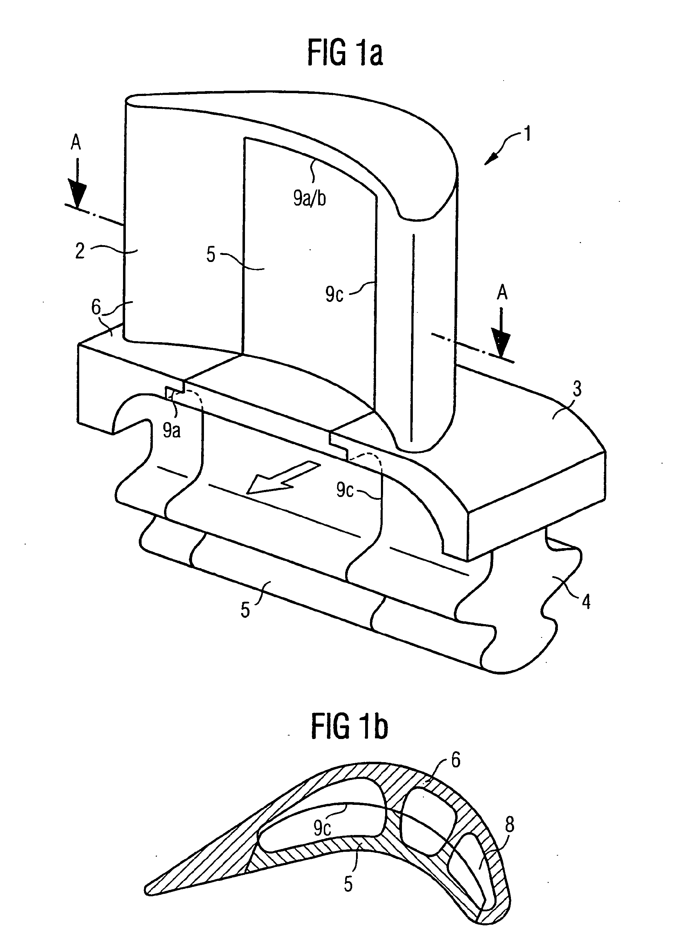

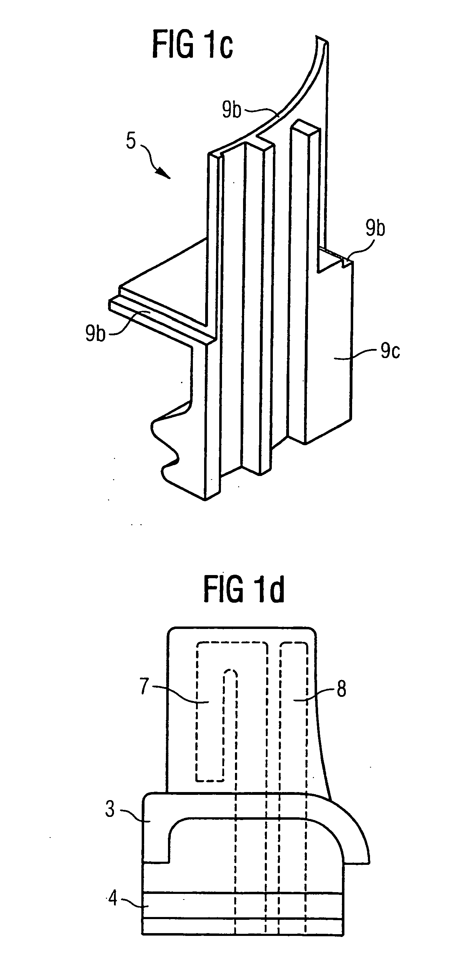

Figur 1 zeigt anhand von vier Ansichten bzw. Teilansichten eine Möglichkeit der Unterteilung einer schnell herzustellenden Turbinenschaufel gemäß dem vorliegenden Verfahren. Figur 1a zeigt hierbei die vollständige Turbinenschaufel 1 mit Schaufelblatt 2, Schaufelfuß 4 und Plattform 3. Eine mögliche Aufteilung dieser Turbinenschaufel in zwei Teilstücke 5 und 6 ist in der Figur angedeutet. Das kleinere Teilstück 5 bildet hierbei einen Einschub in das größere Teilstück 6. Beide Teilstücke bilden zusammengesetzt einen in Figur 1a nicht sichtbaren Hohlraum innerhalb der Turbinenschaufel 1. Der bzw. die Hohlräume 7, 8 sind in der Schnittansicht durch die Schnittlinie A-A in Figur 1b zu erkennen. Der Einschub 5 ist separat nochmals in Figur 1c in Schrägansicht dargestellt. Figur 1d zeigt eine Seitenansicht der zusammengesetzten Turbinenschaufel 1, in der die Hohlräume, der Hinterkantenkanal 7 sowie der Nasenkanal 8, angedeutet sind.

Die Unterteilung der Turbinenschaufel 1 in zwei Teilstücke ist hierbei derart vorgenommen, dass das größere Teilstück 6 Rückhalteflächen 9a für das innere Teilstück 5 bietet, die die radial nach außen gerichteten Fliehkräfte aufnehmen, die bei einem Bauteiltest dieser Turbinenschaufel 1 auf das innere Teilstück 5 einwirken.

Die beiden Teilstücke 5 und 6 werden über ein geeignetes Rapid-Prototype-Verfahren einzeln gegossen und anschließend zusammengeschweißt oder geklebt. Aufgrund der Rückhalteflächen 9a, die mit den entsprechenden Gegenflächen 9b am Einschub 5 zusammenwirken, werden keine besonderen Belastbarkeitsanforderungen an diese Fügeverbindungen gestellt.

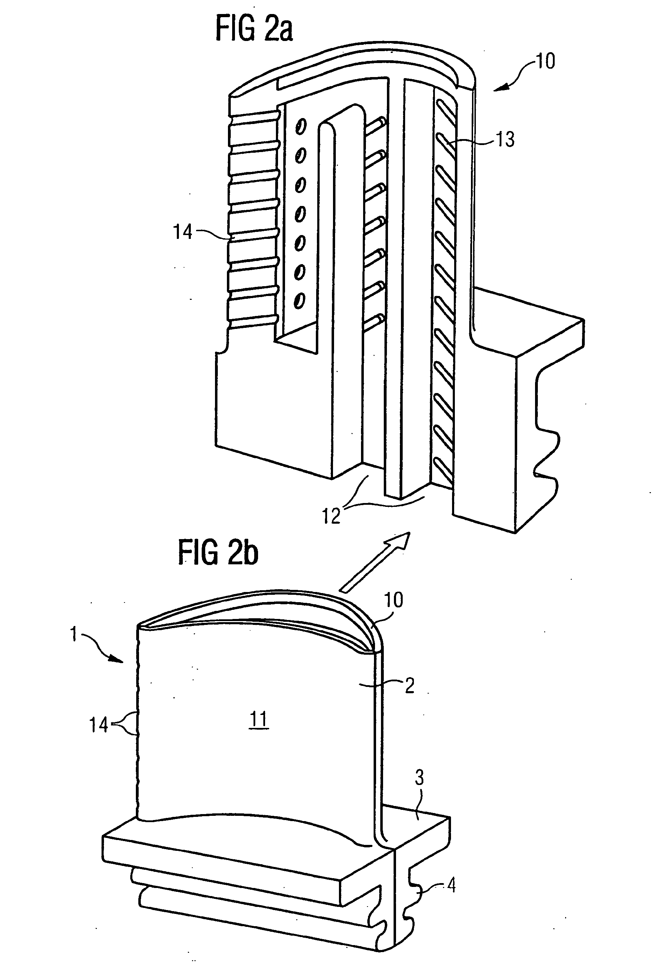

Figur 2 zeigt schließlich ein weiteres Beispiel für eine mögliche Unterteilung einer herzustellenden Turbinenschaufel 1 in zwei Teilstücke 10 und 11. Figur 1a zeigt hierbei ein erstes Teilstück 10 mit entsprechenden Ausnehmungen 12 für den bzw. die Hohlräume. In den Ausnehmungen sind Kühlrippen 13 sowie Kühlluftbohrungen 14 zu erkennen, die beim Gießen dieses Teilstücks in einfacher Weise erzeugt werden können. Figur 2b zeigt die zusammengesetzte Turbinenschaufel 1 mit den entsprechenden Teilstücken 10 und 11. Die beiden Teilstücke können hierbei wiederum mittels eines geeigneten Fügeverfahrens, beispielsweise durch Löten, Schweißen oder Kleben, zusammengefügt sein. Beide Teilstücke werden wiederum mit einem geeigneten Rapid-Prototype-Verfahren einzeln gegossen und erst anschließend zur Bildung der vollständigen Schaufel mit den entsprechenden Hohlräumen 12 zusammengesetzt. Durch die einfache Bereitstellung von Kühlrippen und Kühlbohrungen durch das Gießen der einzelnen Teilstücke kann eine derartige Schaufel besonders für die Entwicklung und Erprobung des Kühlsystems dienen.

### Bezugszeichenliste

- 1: Turbinenschaufel
- 2: Schaufelblatt
- 3: Plattform
- 4: Schaufelfuß
- 5: inneres Teilstück bzw. Einschub
- 6: äußeres Teilstück
- 7: Hinterkantenkanal
- 8: Nasenkanal
- 9a: Fläche zum Aufnehmen der Fliehkräfte
- 9b: Gegenfläche
- 9c: Fügeflächen
- 10: erstes Teilstück
- 11: zweites Teilstück
- 12: Hohlräume
- 13: Kühlrippen
- 14: Kühlluftbohrungen

## Patentansprüche

1. Verfahren zur schnellen Herstellung von Turbinenschaufeln für die Fertigungsentwicklung, bei dem die herzustellende Turbinenschaufel (1) in zwei oder mehrere Teilstücke (5, 6, 10, 11) derart unterteilt wird, dass keines der Teilstücke (5, 6, 10, 11) einen Hohlraum aufweist, und die zwei oder mehreren Teilstücke (5, 6, 10, 11) zur Bildung der hohlen Komponente zusammengefügt werden, **dadurch gekennzeichnet, dass** die einzelnen Teilstücke mittels einer unter Einsatz eines Rapid-Prototype-Verfahrens hergestellten Gussschale gegossen werden, und dass die herzustellende Turbinenschaufel (1) derart in Teilstücke (5, 6) unterteilt ist, dass ein erstes Teistück (5) als Einschub in ein zweites Teilstück (6) ausgebildet ist, wobei das zweite Teilstück (6) zumindest eine Rückhaltefläche (9a) für das erste Teilstück (5) bietet, die die während einer Rotation der Turbinenschaufel (1) auf das erste Teilstück einwirkenden Fliehkräfte aufnimmt.

2. Verfahren nach Anspruch 1,
**dadurch gekennzeichnet,**
**dass** die Teilstücke (5, 6, 10, 11) durch Kleben, Hartlöten oder Schweißen zusammengefügt werden.

3. Verfahren nach Anspruch 1,
**dadurch gekennzeichnet,**
**dass** die Teilstücke (5, 6, 10, 11) durch Schrauben oder Nieten zusammengefügt werden.

4. Verfahren nach einem der Ansprüche 1 bis 3,
**dadurch gekennzeichnet,**
**dass** die Turbinenschaufel (1) in zwei Hälften (5, 6, 10, 11) unterteilt wird, die jeweils eine Hälfte des Schaufelfußes (4) und des Schaufelblattes (3) umfassen.

## Claims

1. Process for the rapid production of turbine blades for manufacturing development, in which the turbine blade (1) to be produced is subdivided into two or more sections (5, 6, 10, 11) in such a way that none of the sections (5, 6, 10, 11) has a cavity, and the two or more sections (5, 6, 10, 11) are joined together to form the hollow component, **characterized in that** the individual sections are cast by means of a casting shell produced using a rapid prototype process, and **in that** the turbine blade (1) to be produced is subdivided into sections (5, 6) in such a way that a first section (5) is designed as a portion pushed into a second section (6), the second section (6) offering at least one retaining surface (9a) for the first section (5), said retaining surface (9a) absorbing the centrifugal forces acting on the first section during rotation of the turbine blade (1).

2. Process according to Claim 1, **characterized in that** the sections (5, 6, 10, 11) are joined together by adhesive bonding, brazing or welding.

3. Process according to Claim 1, **characterized in that** the sections (5, 6, 10, 11) are joined together by screws or rivets.

4. Process according to one of Claims 1 to 3,
**characterized in that** the turbine blade (1) is subdivided into two halves (5, 6, 10, 11) which in each case comprise one half of the blade root (4) and of the aerofoil (3).

## Revendications

1. Procédé de production rapide d'aubes de turbine en vue de l'amélioration de leur fabrication, dans lequel les aubes de turbine (1) à produire sont divisées en deux ou plusieurs parties (5, 6, 10, 11) de telle sorte qu'aucune des parties (5, 6, 10, 11) ne présente d'espace creux, deux ou plusieurs parties (5, 6, 10, 11) étant rassemblées pour former le composant creux, **caractérisé en ce que** les différentes parties sont coulées au moyen d'un moule de coulée fabriqué en utilisant un procédé de prototypage rapide et **en ce que** l'aube de turbine (1) à produire est divisée en parties (5, 6) de telle sorte qu'une première partie (5) soit configurée comme garniture insérée dans une deuxième partie (6), la deuxième partie (6) présentant au moins une surface (9a) de retenue de la première pièce (5) qui reprend les forces centrifuges appliquées sur la première pièce pendant la rotation de l'aube de turbine (1).

2. Procédé selon la revendication 1, **caractérisé en ce que** les parties (5, 6, 10, 11) sont assemblées par collage, brasage ou soudage.

3. Procédé selon la revendication 1, **caractérisé en ce que** les parties (5, 6, 10, 11) sont assemblées par vissage ou rivetage.

4. Procédé selon l'une des revendications 1 à 3, **caractérisé en ce que** l'aube de turbine (1) est divisée en deux moitiés (5, 6, 10, 11) qui comprennent chacune une moitié du pied (4) de l'aube et une moitié de l'aile (3) de l'aube.
